# EUROPEAN PATENT APPLICATION

(11) **EP 1 933 195 A2**
(43) Date of publication of application: **18.06.2008**
(21) Application number: 07024187.2
(22) Date of filing: 13.12.2007
(51) Int. Cl.: G02F 1/13357, F21V 21/00

(54) **Backlight assembly and liquid crystal display including the same**

(30) Priority: 13.12.2006 KR 20060127285
(71) Applicant: Samsung Electronics Co., Ltd., Yeongtong-gu Suwon-city, Gyeonggi-do 442-742 (KR)
(72) Inventor: Kim, Heung-Seok, Yongin-si Gyeonggi-do (KR)
(74) Representative: Weitzel, Wolfgang

(57) **Abstract**

A backlight assembly which is capable of being applied to accommodate liquid crystal displays having various sizes regardless of the size of the liquid crystal display and produced at low cost, and a liquid crystal display Including the same,The backlight assembly, comprising a light source generating light, a bottom chassis comprising a sidewall and a bottom surface and receiving the light source therein a corner-part mold frame disposed at a corner of the bottom chassis, and a mid-part mold frame between the corners of the bottom chassis, wherein the corner-part mold frame and mld-part mold frame have a different shape from each other.

## Description

### BACKGROUND OF THE INVENTION

### Technical Field

The present invention relates to backlight assemblyand liquid crystal displays including the same and, more particularly, to a backlight assembly that Is capable of being extensively applied to liquid crystal displays having various sizes and a liquid crystal display including the same.

### Description of the Related Art

Currently, the liquid crystal display (LCD) is one of the most extensively used flat panel displays (FPD). The liquid crystal display is provided with two substrates on which electrodes are formed, and a liquid crystal layer that is interposed between the substrates. Voltage is applied to the electrodes to rearrange the liquid crystal molecules of the liquid crystal layer, thereby controlling the quantity of transmitted light.

A plurality of elements such as a liquid crystal panel, optical sheets, a light guide plate, or a diffusion plate is provided in the liquid crystal display together with additional parts needed to fix or receive the elements.

In recent years, the demand for liquid crystal displays has been growing. Accordingly, the demand for mass production of various sizes of liquid crystal display has also been growing. In order to produce liquid crystal displays in various sizes, it is required that the parts constituting the liquid crystal display have various sizes, some of which have portions that require bending, thereby increasing production costs and necessitating that different molds be used. Accordingly, there is a need to develop parts that are capable of being used to accommodate liquid crystal displays having various sizes while minimizing the number of required molds and bending portions.

### SUMMARY OF THE INVENTION

According to an exemplary embodiment of the present invention, there is provided a backlight assembly, comprising a light source generating light, a bottom chassis comprising a sidewall and a bottom surface and receiving the light source therein a corner-part mold frame disposed at a corner of the bottom chassis; and a mid-part mold frame between the corners of the bottom chassis, wherein the corner-part mold frame and mid-part mold frame have a different shape from each other. According to another exemplary embodiment of the present Invention, there is provided a liquid crystal display comprising a light source, an optical plate provided on the light source, a optical sheet provided on the optical plate, a bottom chassis comprising a sidewall and a bottom surface to receive the light source, a first mold frame supporting the optical plate and the optical sheet, and a liquid crystal panel disposed on the first mold frame and dlspaying images, wherein the first mold frame comprises a first groove into which the sidewall of the bottom chassis is inserted to be held.
According to still another exemplary embodiment of the present invention, there is provided a liquid crystal display comprising an optical plate an optical sheet provided on the optical plate, a bottom chassis comprising a sidewall and a bottom surface to receive the optical plate, a first mold frame supporting the optical sheet, and a liquid crystal panel disposed on the first mold frame and dispaying images, wherein the first mold frame comprises a first groove into which the sidewall of the bottom chassis is inserted to be held.

### BRIEF DESCRIPTION OF THE DRAWINGS

The above and other features and advantages of the present invention will become more apparent by describing in detail exemplary embodiments thereof with reference to the attached drawings, in which:

FIG. 1 is an exploded perspective view of a liquid crystal display according to a first embodiment of the present Invention;

FIG. 2 is a sectional view of the liquid crystal display taken along the line A-A' of FIG. 1;

FIG. 3 is a perspective view of a bottom chassis that Is Included in the liquid crystal display according to the first embodiment of the present Invention;

FIG. 4 is an exploded perspective view of a back light assembly that is Included in the liquid crystal display according to the first embodiment of the present invention;

FIG. 5 is a perspective view of a portion of a first mold frame that is included in the liquid crystal display according to the first embodiment of the present invention, in which the portion B of FIG. 4 is enlarged;

FIG. 6 is a perspective view of a second mold frame that is included in the liquid crystal display according to the first embodiment of the present invention, in which the portion C of FIG. 4 is enlarged;

FIG. 7 is a perspective view illustrating the assembling of the back light assembly that is included in the liquid crystal display according to the first embodiment of the present invention;

FIG. 8 is a perspective view of the back light assembly that is included in the liquid crystal display according to the first embodiment of the present invention;

FIG. 9 is a perspective view of a back light assembly that is included in a liquid crystal display according to a modification of the first embodiment of the present invention;

FIG. 10 is an exploded perspective view of a liquid crystal display according to a second embodiment of the present invention; and

FIG. 11 is a sectional view of the liquid crystal display taken along the line D-D' of FIG. 10.

### DESCRIPTION OF THE EXEMPLARY EMBODIMENTS

It will be understood that when an element or layer is referred to as being "on" another element or layer, it can be directly on the other element or layer or intervening elements or layers may be present. In contrast, when an element is referred to as being "directly on" another element or layer, there are no intervening elements or layers present. As used herein, the term "and/or" includes any and all combinations of one or more of the associated listed items.

Spatially relative terms, such as "below", "beneath", "lower", "above", "upper" and the like, may be used herein for ease of description to describe one element or feature's relationship to another element(s) or feature(s) as illustrated in the figures. It will be understood that the spatially relative terms are intended to encompass different orientations of the device in use or operation In addition to the orientation depicted in the figures.

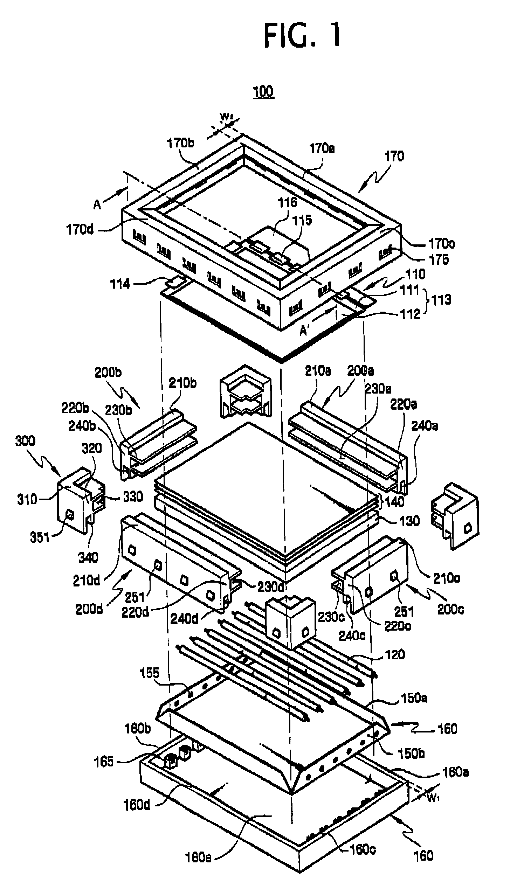

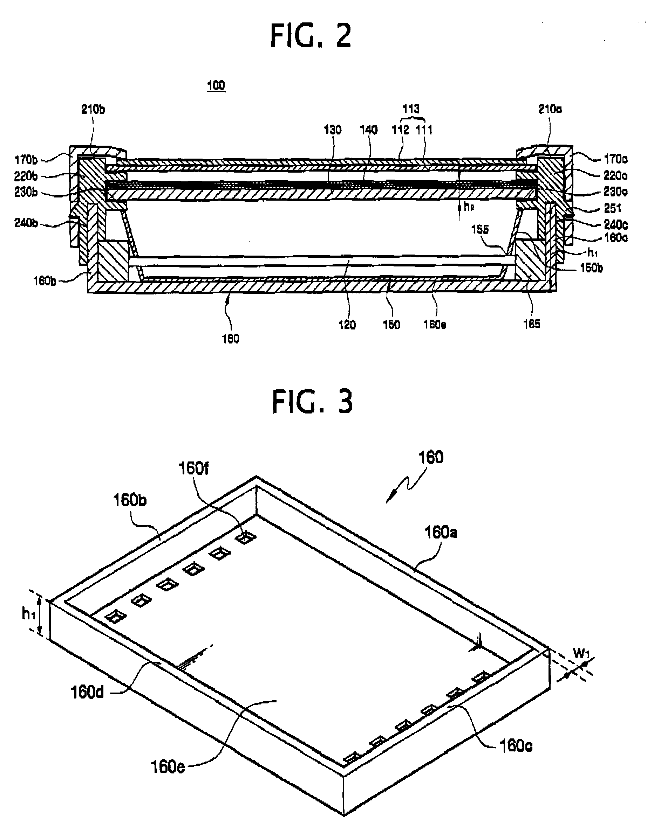

Hereinafter, a liquid crystal display according to a first embodiment of the present invention will be described in detail with reference to FIGS. 1 to 8. FIG. 1 is an exploded perspective view of a liquid crystal display according to a first embodiment of the present invention. FIG. 2 is a sectional view of the liquid crystal display taken along the line A-A' of FIG. 1.

With reference to FIGS. 1 and 2, a liquid crystal display 100 according to the first embodiment of the present invention includes a liquid crystal panel assembly 110, a lamp 120, a diffusion plate 130, optical sheets 140, a reflection sheet 150, a bottom chassis 160, a top chassis 170, and split mold frames 200a, 200b, 200c, 200d, and 300. In connection with this, the split mold frames 200a, 200b, 200c, 200d, and 300 include first mold frames 200a, 200b, 200c, and 200d that are provided on lateral parts of the liquid crystal display 100, and a second mold frame 300 that connect the first mold frames.

The liquid crystal panel assembly 110 includes a thin film transistor substrate 111, a liquid crystal panel 113 that has a color filter substrate 112, a liquid crystal (not shown), a gate tape carrier package 114, a data tape carrier package 115, and a printed circuit board 116.

The liquid crystal panel 113 includes a thin film transistor substrate 111 that has a gate line (not shown), a data line (not shown), a thin film transistor array, and a pixel electrode, and a common electrode substrate 112 that has a black matrix and a common electrode and is provided to face the thin film transistor substrate 111.

The liquid crystal panel 113 on which the above-mentioned plane substrates are layered is provided on the split mold frames 200a, 200b, 200c, 200d, and 300 as described below. To be more specific, the liquid crystal panel 113 Is provided on upper protrusions that protrude from the inner surfaces of the split mold frame sidewalls 220a, 220b, 220c, 220d, and 320 of the split mold frames 200a, 200b, 200c, 200d, and 300.

In addition, the gate tape carrier package 114 is connected to the gate line (not shown) that is formed on the thin film transistor substrate 111, and the data tape carrier package 115 is connected to the data line (not shown) that is formed on the thin film transistor substrate 111.

Various types of driving parts which process gate driving signal and data driving signal so that the gate driving signal is capable of being input into the gate tape carrier package 114 and the data driving signal is capable of being inputted into the data tape carrier package 115 are provided on the printed circuit board 116. The printed circuit board 116 is disposed between a lateral part of the first mold frame 200a and a top chassis sidewall 170a.

An LED (Light Emitted Diode), a CCFL (Cold Cathode Fluorescent Lamp), and an EEFL (External Electrode Fluorescent Lamp) may be used as the lamp 120. The CCFL that is used as the lamp 120 of the present embodiment is disposed in a transverse direction with respect to the liquid crystal display 100. Through the specification, the transverse direction means a direction that Is parallel to a long side of the liquid crystal display 100. In addition, a longitudinal direction means a direction that Is parallel to a short side of the liquid crystal display 100.

The lamp 120 according to the present embodiment may be a direct type in which a plurality of lamps 120 are disposed in parallel on the same phase on the bottom chassis 160.

The lamp 120 is fixed through a lamp insertion hole 155, which is formed through the reflection sheet 150, into a socket 165.

The diffusion plate 130 is disposed on the lamp 120 to diffuse light that is emitted from the lamp 120, thereby improving uniformity of brightness.

The diffusion plate 130 may be formed by mixing a diffusion material with a transparent resin plate In order to ensure the uniformity in the brightness, Examples of the material of the transparent resin plate include, but are not limited to acryls and polycarbonates. Examples of the diffusion material include, but are not limited to crosslinking polymethyl metacrylate, crosslinking polystyrene, crosslinking sodium polyacrylate, crosslinking silicon, crosslinking acryl-styrene copolymer, calcium carbonate, and barium sulphate particles.

The diffusion plate 130 is flat, and disposed on the split mold frames 200a, 200b, 200c, 200d, and 300 as described below. In addition, the center of the diffusion plate 130 may be supported by a supporter (not shown) so as to prevent drooping at the center.

The optical sheets 140 function to diffuse and concentrate light that is emitted from the diffusion plate 130.

The optical sheets 140 include a diffusion sheet, a first prism sheet, and a second prism sheet. In connection with this, the diffusion sheet is provided on the optical sheets 140 to improve brightness and the uniformity in the brightness of light that is emitted from the lamp 120. The first prism sheet and the second prism sheet are provided on the diffusion sheet to concentrate light that is diffused by the diffusion plate and then emit the concentrated light. However, in the case of when the desirable brightness and viewing angle can be ensured using only the first prism sheet, the second prism sheet may be removed.

The optical sheets 140 are formed of a plane sheet, and disposed in the split mold frames 200a, 200b, 200c, 200d, and 300 In conjunction with the diffusion plate 130.

The reflection sheet 150 is disposed on a bottom surface 160e of the bottom chassis 160, and reflects a portion of light upward that is emitted from the lamp 120 and does not progress toward the liquid crystal panel 113 but leaks through a lower part or a lateral part of the bottom chassis 160.

The reflection sheet 150 may be produced by dispersing a white pigment such as titanium oxides In a sheet made of a synthetic resin material, and bubbles may be dispersed in the sheet made of the synthetic resin material to scatter light.

The reflection sheet 150 may include a rectangular bottom, and at least one inclined surface 150a and 150b that is formed along the four sides of the bottom and reflects light emitted through the lateral parts of the bottom chassis 160. The inclined surfaces 150a and 150b may be formed to correspond to bottom chassis sidewalls 160a, 160b, 160c, and 160d of the bottom chassis. Of the inclined surfaces 150a and 150b, the lamp insertion hole 155 through which the lamp 120 passes may be formed In the inclined surface 150b that is formed parallel to the short sides of the bottom chassis 160. Since the inclined surfaces 150a and 150b are formed in the reflection sheet 150, it is unnecessary to provide an additional low mold (not shown) including the Inclined surfaces under the liquid crystal display 100. Accordingly, the production cost of the liquid crystal display 100 may be reduced.

The bottom chassis 160 of the present embodiment will be described in detail with reference to FIGS. 1 and 3 hereinafter.

The bottom chassis 160 includes a rectangular bottom 160e, and bottom chassis sidewalls 160a, 160b, 160c, and 160d that are formed along the edge of the bottom 160e. A socket insertion hole 160f is formed in the bottom 160e of the bottom chassis 160 to accommodate a socket (see reference numeral 165 of FIG. 1). The bottom chassis sidewalls 160a, 160b, 160c, and 160d may extend to be perpendicular to the bottom 160e of the bottom chassis 160. That is, the bottom chassis 160 may have a box shape structure in which the bottom chassis sidewalls 160a, 160b, 160c, and 160d having a rectangular plate shape are attached along the four sides of the bottom 160e having the rectangular plate shape.

Since the bottom chassis sidewalls 160a, 160b, 160c, and 160d are inserted into the split mold frames 200a, 200b, 200c, 200d, and 300 as described below, the upper portions of the bottom chassis sidewalls 160a, 160b, 160c, and 160d do not have bending portions. Accordingly, the structure of the bottom chassis 160 is simplified and the width (w₁) of the bottom chassis 160 is reduced by the width of the bending portion in comparison with the case of when the upper portions of the bottom chassis sidewalls 160a, 160b, 160c, and 160d are bent to have a U-shape. Thus, the cost of material may be reduced. In addition, because the bottom chassis 160 has simple structure when the bending portion is not provided, the dimensional precision of the liquid crystal display 100 may be improved.

The bottom chassis 160 receives the lamp 120 and the reflection sheet 150 in a receiving region that is formed by the bottom chassis sidewalls 160a, 160b, 160c, and 160d and the bottom 160e of the bottom chassis. Since the liquid crystal panel 113, the diffusion plate 130, and the optical sheets 140 are received in the split mold frames 200a, 200b, 200c, 200d, and 300 but not directly In the bottom chassis 160, it Is required that the heights (h₁) of the bottom chassis sidewalls 160a, 160b, 160c, and 160d are large enough to form a region capable of receiving the lamp 120 and the socket 165. That is, since the split mold frames 200a, 200b, 200c, 200d, and 300 are used in the present embodiment, the height (h₁) of the bottom chassis 160 is reduced. Accordingly, the cost of material may be additionally reduced during the production of the bottom chassis 160.

Turning to FIGS. 1 and 2, a top chassis 170 is disposed on the upper portion of the liquid crystal panel 113 to cover the upper part of the liquid crystal panel 113.

The top chassis 170 includes four top chassis sidewalls 170a, 170b, 170c, and 170d, and a window is formed on the upper parts of the four top chassis sidewalls 170a, 170b, 170c, and 170d to expose the liquid crystal panel 113. The upper parts of the top chassis sidewalls 170a, 170b, 170c, and 170d may be bent downward so as to push the upper edge of the liquid crystal panel 113 and thus fix the liquid crystal panel.

As described above, since the bottom chassis 160 may be formed without the horizontally bending portion, the width (w₁) of the bottom chassis 160 is reduced. Thus, the bezel widths (w₂) of the upper parts of the top chassis sidewalls 170a, 170b, 170c, and 170d according to the present embodiment may be reduced. To be more specific, the bezel widths (w₂) of the upper parts of the top chassis sidewalls 170a, 170b, 1 70c, and 170d are set so that the upper parts of the top chassis sidewalls cover the split mold frame sidewalls 220a, 220b, 220c, 220d, and 320 of the split mold frames 200a, 200b, 200c, 200d, and 300 as described below, and push and fix the liquid crystal panel 113. Reduction in the bezel width (w₂) of the top chassis 170 is useful in respects to the enlargement of the liquid crystal display 100.

Fastening grooves 175 of the top chassis 170 that are formed in the top chassis sidewalls 170a, 170b, 170c, and 170d may be fastened with fastening protrusions 251 and 351 of the split mold frames 200a, 200b, 200c, 200d, and 300 so that the top chassis 170 Is combined with the split mold frames 200a, 200b, 200c, 200d, and 300. In addition, the combination of the top chassis 170 and the split mold frames 200a, 200b, 200c, 200d, and 300 may be performed using a screw. Alternatively, the combination may be performed using other types of means. In order to ensure strong combination of the liquid crystal display 100, the top chassis 170 may be combined with the bottom chassis 160 by using hooks and/or screws,

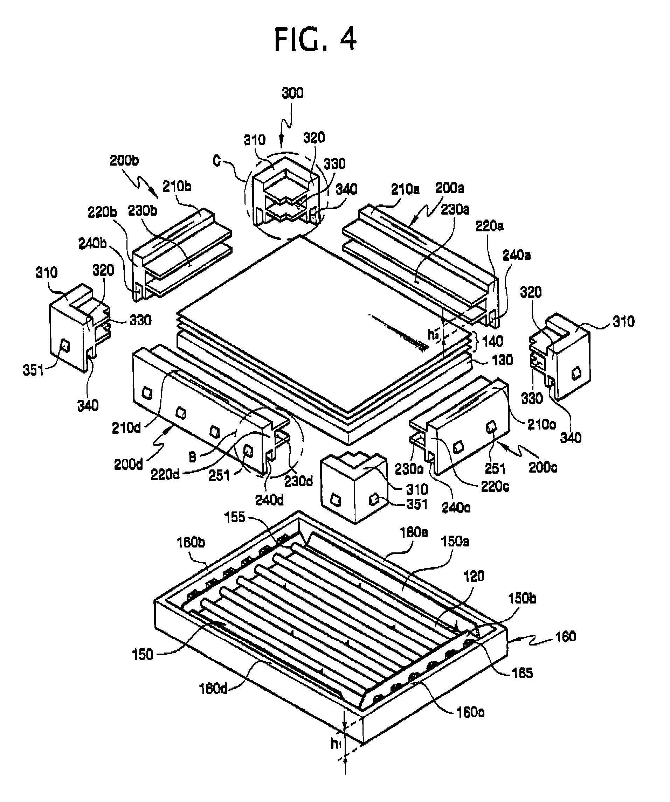

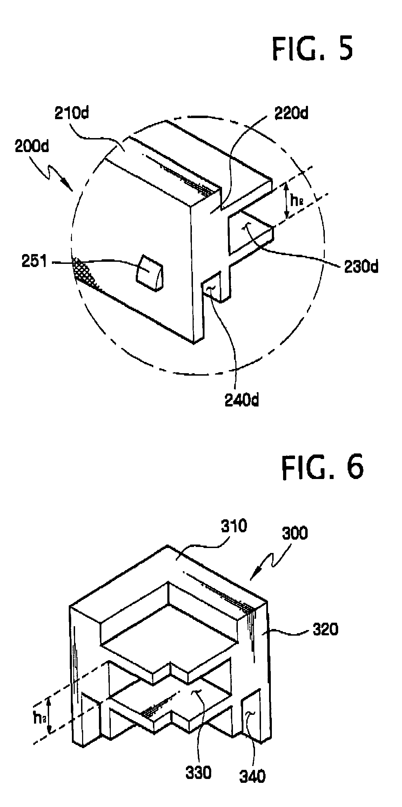

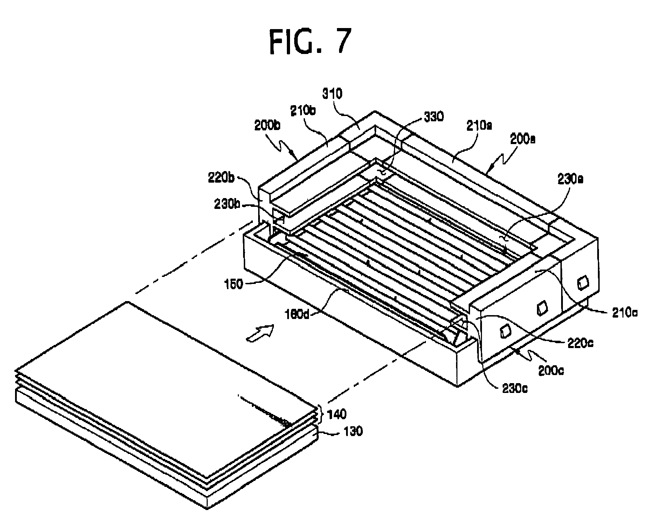

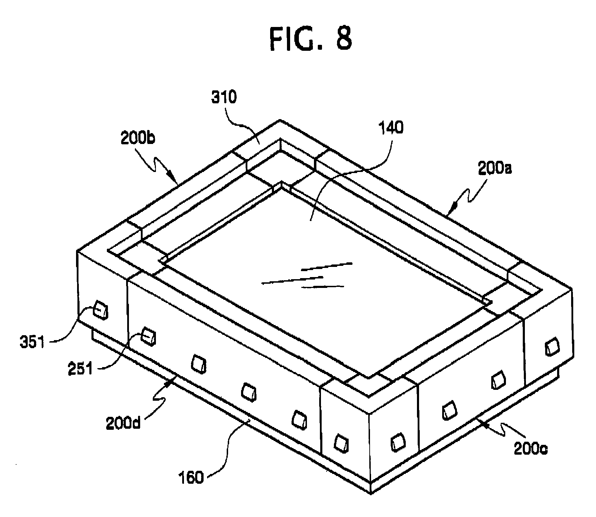

The back light assembly that is included in the liquid crystal display 100 according to the first embodiment of the present invention will be described in detail with reference to FIGS. 4 to 8 hereinafter. The back light assembly includes the split mold frames 200a, 200b, 200c, 200d, and 300, the diffusion plate 130, the optical sheets 140, the lamp 120, the reflection sheet 150, and the bottom chassis 160. FIG. 4 is an exploded perspective view of a back light assembly that is included in the liquid crystal display according to the first embodiment of the present Invention. FIG. 5 is a perspective view of a portion of a first mold frame that Is included In the liquid crystal display according to the first embodiment of the present invention, in which the portion B of FIG. 4 Is enlarged. FIG. 6 is a perspective view of a second mold frame that Is included In the liquid crystal display according to the first embodiment of the present invention, in which the portion C of FIG. 4 Is enlarged. FIG. 7 is a perspective view illustrating the assembling of the back light assembly that is included in the liquid crystal display according to the first embodiment of the present invention. FIG. 8 is a perspective view of the back light assembly that is included in the liquid crystal display according to the first embodiment of the present invention.

With reference to FIGS, 4 to 6, the split mold frames 200a, 200b, 200c, 200d, and 300 include a pair of first mold frames 200a and 200d that are transversely disposed with respect to the bottom chassis 160, a pair of first mold frames 200b and 200c that are longitudinally disposed with respect to the bottom chassis 160, and the second mold frames 300 that are disposed at the corners of the bottom chassis sidewalls 160a, 160b, 160c, and 160d to connect the first mold frames 200a, 200b, 200c, and 200d to each other.

A pair of transverse first mold frames 200a and 200d are combined with the transverse bottom chassis sidewalls 160a and 160d, and face each other. The transverse first mold frames 200a and 200d are formed to have a length smaller than those of the transverse bottom chassis sidewalls 160a and 160d. A pair of longitudinal first mold frames 200b and 200c are combined with the longitudinal bottom chassis sidewalls 160b and 160c, and face each other. The longitudinal first mold frames 200b and 200c are formed to have a length smaller than those of the longitudinal bottom chassis sidewalls 160b and 160c. The transverse first mold frames 200a and 200d have substantially the same structure as the longitudinal first mold frames 200b and 200c, with the exception of the length.

A plurality of first mold frames 200a, 200b, 200c, and 200d include the first mold frame upper parts 210a, 210b, 210c, and 210d, the first mold frame sidewalls 220a, 220b, 220c, and 220d, second grooves 230a, 230b, 230c, and 230d, first grooves 240a, 240b, 240c, and 240d, and fastening protrusions 251 and 351.

The transverse first mold frame upper parts 210a and 210d are formed transversely with respect to the liquid crystal display (see reference numeral 100 of FIG. 1) and parallel to the bottom surface (reference numeral 160e of FIG. 1) of the bottom chassis 160, and come into contact with the transverse top chassis sidewalls (see reference numerals 170a and 170b of FIG. 2). The longitudinal first mold frame upper parts 210b and 210c are formed longitudinally with respect to the liquid crystal display and parallel to the bottom surface (see reference numeral 160e of FIG. 1) of the bottom chassis 160, and come into contact with the longitudinal top chassis sidewalls (see reference numerals 170b and 170c of FIG. 2).

The first mold frame sidewalls 220a, 220b, 220c, and 220d are the beams that are parallel to the bottom chassis sidewalls 160a, 160b, 160c, and 160d, and have the first mold frame upper parts 210a, 210b, 220c, and 210d. A pair of protrusions that protrude from the inner surfaces of the first mold frame sidewalls 220a, 220b, 220c, and 220d are formed at a lower portion of each of the first mold frame upper parts 210a, 210b, 210c, and 210d so that the protrusions and the first mold frame upper parts 210a, 210b, 210c, and 210d form stepped portions. The liquid crystal panel (see reference numeral 113 of FIG. 1) is seated on the upper protrusions and supported by the upper protrusions.

The second grooves 230a, 230b, 230c, and 230d are formed on the inner surfaces of the first mold frame sidewalls 220a, 220b, 220c, and 220d. That is, each of the second grooves 230a, 230b, 230c, and 230d is defined by a pair of protrusions that protrude from the inner surfaces of the first mold frame sidewalls 220a, 220b, 220c, and 220d. The diffusion plate 130 and the optical sheets 140 are inserted into the second grooves 230a, 230b, 230c, and 230d to be fixed. The heights (h₂) of the second grooves 230a, 230b, 230c, and 230d may be the same as the sum total of the thicknesses of the diffusion plate 130 and the optical sheets 140. A method of inserting the diffusion plate 130 and the optical sheets 140 into the second grooves 230a, 230b, 230c, and 230d will be described hereafter.

Since the optical sheets 140 are inserted Into the second grooves 230a, 230b, 230c, 230d, and 330 of the split mold frames 200a, 200b, 200c, 200d, and 300 to be fixed, an insertion groove or protrusion that Is typically formed to fix the optical sheets are not formed In the optical sheets 140 of the present embodiment. Accordingly, process time and production cost may be reduced during the production of the optical sheets 140.

The first grooves 240a, 240b, 240c, and 240d are formed on the bottom surfaces of the first mold frame sidewalls 220a, 220b, 220c, and 220d. To be more specific, the first grooves 240a, 240b, 240c, and 240d are formed parallel to the bottom chassis sidewalls 160a, 160b, 160c, and 160d. That is, the first grooves are formed so that the sidewalls of the first grooves are perpendicular to the bottom surface of the bottom chassis 160. Each of the first grooves 240a, 240b, 240c, and 240d is defined by two protrusions that are perpendicular to the bottom surface of the bottom chassis 160, and may have the U-shaped section. Among the two protrusions, the inner protrusion that is formed at the internal side of the bottom chassis 160 may have a height less than that of the external protrusion that is formed at the external side of the bottom chassis 160 in consideration of the height of the socket 165. The bottom chassis sidewalls 160a, 160b, 160c, and 160d are inserted into the first grooves 240a, 240b, 240c, and 240d, respectively, to fix the first mold frames 200a, 200b, 200c, and 200d.

A plurality of fastening protrusions 251 may be formed on the external surface of each of the first mold frame sidewalls 220a, 220b, 220c, and 220d. As described above, the fastening protrusions 251 are fastened with the fastening grooves (reference numeral 175 of FIG. 1) of the top chassis.

The second mold frames 300 are disposed at the corners of the bottom chassis 160 to connect the ends of the first mold frames 200a, 200b, 200c, and 200d to each other. That is, the second mold frames 300 are combined with the corners of the bottom chassis 160, and the ends of the second mold frames 300 come into contact with the ends of the transverse first mold frames 200a and 200d and the ends of the longitudinal first mold frames 200b and 200c.

Each of the second mold frames 300 includes the second mold frame upper part 310, the second mold frame sidewall 320, the second groove 330, the first groove 340, and the fastening protrusion 351. The second mold frames 300 are disposed at the corners of the bottom chassis 160, and extend along the bottom chassis sidewalls 160a, 160b, 160c, and 160d of the bottom chassis 160. That is, in the case of when the bottom chassis 160 have the rectangular shape, the second mold frame 300 may be bent to have the L shape. Accordingly, the second mold frame upper part 310, the second mold frame sidewall 320, the second groove 330, and the first groove 340 may be bent to have the L shape.

The second mold frame upper parts 310 are parallel to the first mold frame upper parts 210a, 210b, 210c, and 210d, and the constituent elements of the second mold frames 300 are parallel to the corresponding constituent elements of the first mold frames 200a, 200b, 200c, and 200d.

The second mold frame sidewalls 320 are formed parallel to the first mold frame sidewalls 220a, 220b, 220c, and 220d, and connected to the first mold frame sidewalls 220a, 220b, 220c, and 220d that are adjacent to the second mold frame sidewalls 320. In this case, the height (h₂) of each of the second grooves 330 of the second mold frames 300 is the same as the height (h₂) of each of the second grooves 230a, 230b, 230c, 230d, and 330 of the first mold frame.

The split mold frames 200a, 200b, 200c, 200d, and 300 may be made of a material that has sufficient hardness to support the liquid crystal panel and fix the diffusion plate 130 and the optical sheets 140, for example, polycarbonate (PC) or a material in which glass fibers are added to polycarbonate. The two protrusions that define each of the first grooves 240a, 240b, 240c, 240d, and 340 of the split mold frames 200a, 200b, 200c, 200d, and 300 may be colored using, for example, white-based ink, so that light emitted from the lamp 120 is reflected. The two protrusions that define the second grooves 230a, 230b, 230c, 230d, and 330, and the upper parts of the split mold frames 200a, 200b, 200c, 200d, and 300 may be colored using black-based colors so as to prevent leakage of light.

The split mold frames 200a, 200b, 200c, 200d, and 300 include the first grooves 240a, 240b, 240c, 240d, and 340, the second grooves 230a, 230b, 230c, 230d, and 330, and the split mold frame sidewalls 220a, 220b, 220c, 220d, and 320, and have a complex shape. The split mold frames 200a, 200b, 200c, 200d, and 300 may be produced by an injection molding process in order to obtain the complex shape.

Since the bottom chassis sidewalls 160a, 160b, 160c, and 160d are inserted into the first grooves 240a, 240b, 240c, 240d, and 340 of the split mold frames 200a, 200b, 200c, 200d, and 300 to be fixed, the bottom chassis 160 does not include the bending portion. That is, since the bottom chassis 160 is formed of the bottom 160e, and the bottom chassis sidewalls 160a, 160b, 160c, and 160d that are perpendicular to the bottom 160e, the width of the bottom chassis 160 is reduced. The bottom chassis 160 is useful in respect to produce the liquid crystal display having a large area (see reference numeral 100 of FIG. 1), the cost of material of the bottom chassis 160 is reduced, and the production cost of the liquid crystal display Is reduced.

In addition, as described above, the diffusion plate 130 and the optical sheets 140 are inserted into the second grooves 230a, 230b, 230c, 230d, and 330 of the split mold frames 200a, 200b, 200c, 200d, and 300 to be fixed. The bottom chassis sidewalls 160a, 160b, 160c, and 160d are inserted into the first grooves 240a, 240b, 240c, 240d, and 340 of the split mold frames 200a, 200b, 200c, 200d, and 300 to fix the split mold frames 200a, 200b, 200c, 200d, and 300. A plurality of lamps 120 that are disposed in parallel on the same phase and the reflection sheet 150 that is provided under the lamps 120 are disposed under the split mold frames 200a, 200b, 200c, 200d, and 300. Since the split mold frames 200a, 200b, 200c, 200d, and 300 support the liquid crystal panel, the diffusion plate 130, and the optical sheets 140, it is unnecessary to provide the mold frame and the low mold that supports the liquid crystal panel, the diffusion plate, and the optical sheets. Accordingly, the structure of the liquid crystal display 100 is simplified and the production cost is reduced.

The assembling of the back light assembly according to the present embodiment will be described with reference to FIGS. 7 and 8 hereinafter. FIG. 7 is a perspective view illustrating the assembling of the back light assembly that is included in the liquid crystal display according to the first embodiment of the present invention. FIG. 8 is a perspective view of the back light assembly that is included in the liquid crystal display according to the first embodiment of the present invention.

As shown in FIC. 7, any one of a pair of transverse first mold frames 200a and 200d and a pair of longitudinal first mold frames 200b and 200c are assembled with the bottom chassis 160 that receives the lamps 120 and the reflection sheet 150. Next, the second mold frame 300 is provided at the corners of the first mold frame 200a, the longitudinal first mold frames 200b and 200c, and the bottom chassis 160. Thus, another first mold frame 200d of a pair of transverse first mold frames 200a and 200d, and the two second mold frames 300 are not assembled, and the split mold frames 200a, 200b, 200c, 200d, and 300 have the U-shape. In connection with this, the diffusion plate 130 and the optical sheets 140 may slide into the structure having the U-shape that includes the first mold frame 200a, the longitudinal first mold frames 200b and 200c, and the second grooves 230a, 230b, 230c, and 330 of the second mold frame 300 assembled with each other.

Next, the first mold frame 200d and the first grooves 240d and 340 of the second mold frame 300 are inserted into the bottom chassis 160, and the diffusion plate 130 and the optical sheets 140 are inserted into the second grooves 230d and 330, thereby completing the production of the back light assembly shown in FIG. 8. Since the diffusion plate 130 and the optical sheets 140 slide to perform the assembling, It is unnecessary to form additional insertion grooves on members such as the diffusion plate 130 and the optical sheets 140 to fix the diffusion plate 130 and the optical sheets 140. Thus, it is easy to produce the members, and an assembling margin is ensured.

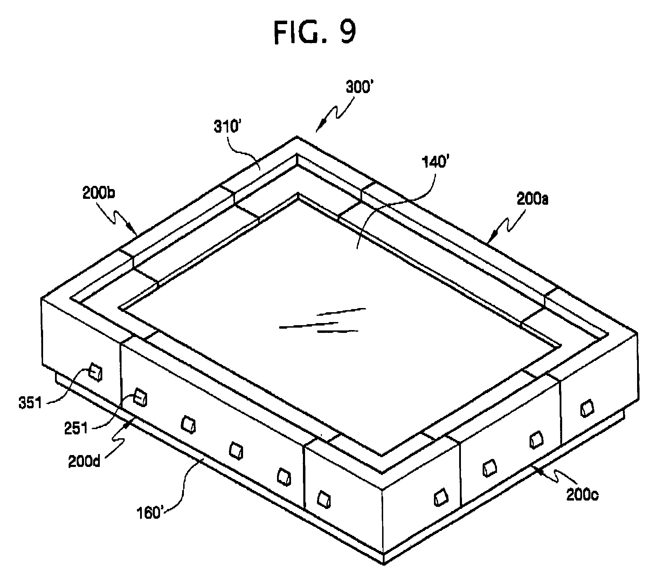

Subsequently, the back light assembly that is included in the liquid crystal display according to the modification of the first embodiment of the present invention will be described with reference to FIG. 9. FIG. 9 is a perspective view of the back light assembly that is included in the liquid crystal display according to the modification of the first embodiment of the present invention. For convenience of the description, the members that have the same function as the members shown in the drawings of the former embodiment are referred to as the same reference numerals, and the description thereof will be omitted or briefly given. The liquid crystal display according to the modification has the size that is different from that of the liquid crystal display according to the former embodiment. The liquid crystal panel (not shown), and the top chassis 170 have the size that correspond to the size of the back light assembly.

The back light assembly according to the present modification has substantially the same structure as the back light assembly of the former embodiment, except that the back light assemblies have the different sizes.

The bottom chassis 160' according to the present modification has a size that is different from that of the bottom chassis 160 according to the former embodiment, In the present modification, the bottom chassis 160' has a size larger than that of the bottom chassis 160 according to the former embodiment. However, the bottom chassis 160' may have a size smaller than that of the bottom chassis 160 according to the former embodiment.

The first mold frames 200a, 200b, 200c, and 200d, and the second mold frame 300' of the split mold frames 200a, 200b, 200c, 200d, and 300' are assembled with the bottom chassis 160', In this case, the first mold frames 200a, 200b, 200c, and 200d have substantially the same size and structure as those of the former embodiment. In the case of when the size of the bottom chassis 160' is larger than that of the bottom chassis 160 according to the former embodiment, the size of the second mold frame 300' is larger than compared to that of the former embodiment. That is, even though the size of the liquid crystal display is increased, the first mold frames 200a, 200b, 200c, and 200d having the same sizes as those of the first mold frames of the former embodiment are used, and the second mold frame 300' having the size larger than that of the second mold frame of the former embodiment is used. Thereby, it is possible to produce the parts that are capable of being used to accommodate liquid crystal displays having different sizes. Accordingly, the production cost of the mold can be reduced in comparison with the case of when the split mold frames 200a, 200b, 200c, 200d, and 300 are produced using molds having different sizes according to the size of the liquid crystal display.

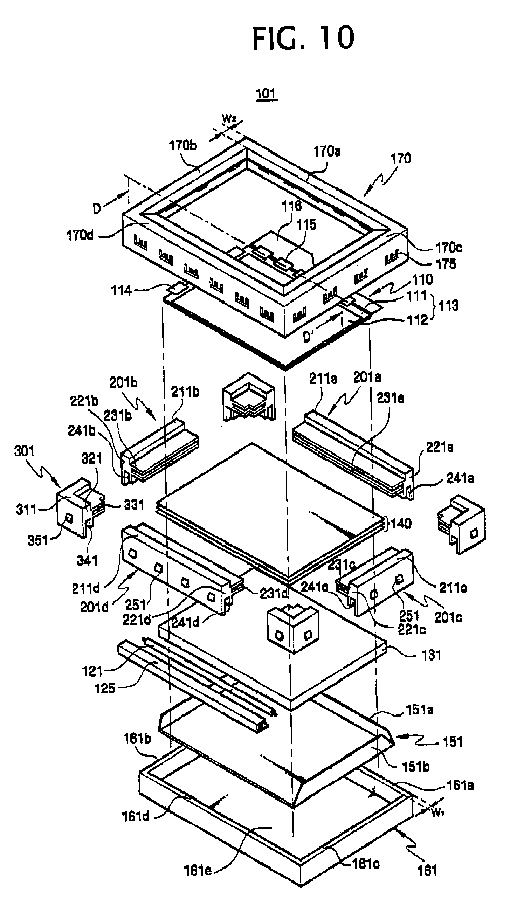

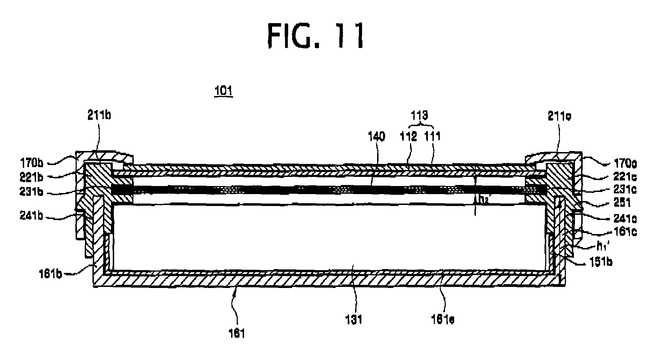

A liquid crystal display according to the second embodiment of the present invention will be described in detail with reference to FIGS. 10 and 11 hereinafter. FIG. 10 is an exploded perspective view of the liquid crystal display according to the second embodiment of the present invention, FIG. 11 is a sectional view of the liquid crystal display taken along the line D-D' of FIG. 10. For convenience of the description, the members that have the same function as the members shown in the drawing of the first embodiment of the present invention are referred to as the same reference numerals, and the description thereof will be omitted or briefly given. A liquid crystal display 101 according to the present embodiment has substantially the same structure as the liquid crystal display 100 according to the first embodiment of the present invention, with the exception of some different constituent elements. That is, as shown in FIGS. 10 and 11, the liquid crystal display 101 according to the present embodiment is an edge type in which lamps 121 are provided on any one side or both sides of the bottom chassis 161.

As shown in FIG. 10, the liquid crystal display 101 according to the second embodiment of the present invention includes a liquid crystal panel assembly 110, a lamp 121, optical sheets 140, a reflection sheet 151, a bottom chassis 161, a top chassis 170, and split mold frames 201 a, 201b, 201c, 201 d, and 301.

The lamps 121 according to the present embodiment are disposed at any one side or both sides of the bottom chassis 161 to emit light through any one side or both sides of a light guide plate 131 as described below to the liquid crystal panel 113. That is, the liquid crystal display 101 according to the present embodiment is an edge type in which the lamps 121 are disposed at any one side or both sides of the liquid crystal display 101.

The liquid crystal display 101 according to the present embodiment may further include a lamp cover 125 that has an inner surface coated with a reflection material in order to assure desirable brightness of light emitted from the lamp 121. In the case of when the lamps 121 are disposed at both sides of the liquid crystal display 101, the lamp cover 125 is disposed at both sides of the liquid crystal display 101. The lamp cover 125 has the U-shape to surround the lamp 121, and transmits light emitted from the lamp 121 to the light guide plate 131.

For example, the light guide plate 131 has a rectangular plate shape, and functions to guide light emitted from the lamp 121. The light guide plate 131 may be disposed at lower portions of the second grooves 230a, 230b, 230c, 230d, and 330 of the split mold frames 201 a, 201 b, 201c, 201d, and 301 as described below. To be more specific, the light guide plate 131 may be interposed between the bottom surface of the reflection sheet 151 and the lower protrusions that define the second grooves 230a, 230b, 230c, 230d, and 330 of the split mold frames 201 a, 201b, 201c, 201d, and 301.

The light guide plate 131 may be made of a material that has light transmission, for example, an acryl resin such as polymethyl methacrylates (PMMA), or a material that has a predetermined refractive index such as polycarbonates (PC), so as to efficiently guide light.

Since the angle of light that is incident on any one side or both sides of the light guide plate 131 made of the above-mentioned material is In the range of a critical angle of the light guide plate 131, light is incident on the internal side of the light guide plate 131. When light is incident on the upper surface or the lower surface of the light guide plate 131, since the angle of light is not in the range of the critical angle, light is not emitted from the light guide plate 131, but is uniformly transmitted to the inside of the light guide plate 131.

A scattering pattern (not shown) is formed on any one surface of the upper surface and the lower surface of the light guide plate 131, for example, the lower surface of the light guide plate, so as to emit the guided light upward. That is, the scattering pattern may be printed on any one surface of the light guide plate 131 using, for example, ink, so that the light is emitted from the inside of the light guide plate 131 upward. The scattering pattern may be formed using the ink. Alternatively, fine grooves or protrusions may be formed on the light guide plate 131. With respect to this, various modifications may be performed.

The reflection sheet 151 of the present embodiment may have a rectangular shape, and is made of substantially the same material as the reflection sheet of the former embodiment to perform substantially the same function. The reflection sheet 151 according to the present embodiment is provided on the bottom chassis 161, reflects light that is emitted from the lamp 121, and has at least one inclined surface that corresponds to the bottom chassis sidewalls 161a, 161b, 161c, and 161d. However, unlike the former embodiment, the inclined surface 151 a may not be formed at any one side or both sides at which the lamp cover 125 is disposed. That is, in the case of when the lamp 121 is disposed at one side of the liquid crystal display 101, the inclined surfaces 151a and 151b may be formed along the three edges of the rectangular bottom of the reflection sheet 151 according to the present embodiment.

With reference to FIGS. 10 and 11, since the lamp 121 is not disposed on the bottom surface 161 e of the bottom chassis 161 in the case of the bottom chassis 161 according to the present embodiment, the socket insertion hole (reference numeral 160f of FIG. 3) is not provided unlike the former embodiment.

Like the former embodiment, the bottom chassis sidewalls 161a, 161b, 161c, and 161d according to the present embodiment do not include the bending portions having the U-shape, and are perpendicular to the bottom surface 161e. Since the bottom chassis sidewalls 161a, 161b, 161c, and 161d according to the present embodiment have a relatively simpler shape, the production cost of the bottom chassis 161 is reduced. In addition, the heights (h_{1'}) of the bottom chassis sidewalls 161a, 161b, 161c, and 161d according to the present embodiment depend on the thickness of the light guide plate 131, and may be the same as or different from those of the bottom chassis sidewalls according to the former embodiment.

The split mold frames 201a, 201b, 201c, 201d, and 301 according to the present embodiment may have substantially the same structure as those of the former embodiment, with the exception of the heights (h_{2'}) of the second grooves 230a, 230b, 230c, 230d, and 330. The split mold frames 201a, 201b, 201c, 201d, and 301 according to the present embodiment include first mold frames 201a and 201d that are disposed parallel to a transverse direction of the liquid crystal display 101, first mold frames 201b and 201c that are disposed parallel to a longitudinal direction of the liquid crystal display 101, and second mold frames 301 that are provided between the first mold frames.

The first mold frames 201a, 201b, 201c, and 201d that are shown in FIG. 11 include first mold frame upper surfaces 211a, 211b, 211c, and 211d, first mold frame sidewalls 221a, 221b, 221c, and 221d, second grooves 231a, 231b, 231c, and 231d, first grooves 241a, 241b, 241c, and 241d, and fastening protrusions 251. Since only the optical sheets 140 are inserted into the second grooves 230a, 230b, 230c, and 230d of the first mold frames 201a, 201b, 201c, and 201d according to the present embodiment, the heights (h_{2'}) of the second grooves 230a, 230b, 230c, and 230d may be smaller than compared to the case of the former embodiment in which the diffusion plate (see reference numeral 130 of FIG. 1) and the optical sheets (see reference numeral 140 of FIG. 1) are inserted. The heights of the second grooves (not shown) of the second mold frames 301 are the same as those of the first mold frames 201a, 201b, 201c, and 20 d.

Although not shown In the drawing, the liquid crystal display according to the modification of the present embodiment may have a size that is different from that of the liquid crystal display according to the present embodiment. That is, the liquid crystal display according to the modification of the present embodiment may have a size that is larger than that of the liquid crystal display according to the second embodiment of the present invention. In this case, the first mold frames (see reference numerals 201a, 201b, 201c, and 201d of FIG. 10) may have substantially the same size as those of the second embodiment of the present invention, and the second mold frames (see reference numeral 301 of FIG. 10) may have the length that is larger than those of the second mold frames according to the second embodiment of the present Invention.

Although the present Invention has been described in connection with the exemplary embodiments of the present invention, it will be apparent to those skilled in the art that various modifications and changes may be made thereto without departing from the scope and spirit of the invention. Therefore, it should be understood that the above embodiments are not limitative, but illustrative in all aspects.

As described above, the split mold frames and the liquid crystal displays including the same according to the embodiments and the modifications of the present Invention have the following one or more advantages.

First, the split mold frame is capable of being universally applied to the liquid crystal displays having various sizes regardless of the size of the liquid crystal display.

Second, since it is unnecessary to provide an additional low mold receiving a diffusion plate and optical sheets, the number of parts is reduced. Third, since it is unnecessary to form a bending portion in a bottom chassis, the production cost of the bottom chassis and a bezel width of the liquid crystal display are reduced. Accordingly, enlargement of the liquid crystal display is desirably ensured.

## Claims

1. A backlight assembly, comprising:
a light source generating light;
a bottom chassis comprising a sidewall and a bottom surface and receiving the light source therein;
a corner-part mold frame disposed at a corner of the bottom chassis; and
a mid-part mold frame between the corners of the bottom chassis,
wherein the corner-part mold frame and mid-part mold frame have a different shape from each other.

2. The backlight assembly of claim 1, wherein a plurality of the corner-part mold frame and the mid-part mold frame is alternately disposed to make a closed loop.

3. The backlight assembly of claim 1, wherein at least one of the corner-part mold frame and the mid-part mold frame comprise a first groove at the bottom thereof.

4. The backlight assembly of claim 1, wherein at least one of the corner-part mold frame and the mid-part mold frame comprise a second groove protruding from the inner surface thereof.

5. A liquid crystal display comprising:
a light source;
an optical plate provided on the light source;
a optical sheet provided on the optical plate;
a bottom chassis comprising a sidewall and a bottom surface to receive the light source;
a first mold frame supporting the optical plate and the optical sheet; and
a liquid crystal panel disposed on the first mold frame and dispaying images,
wherein the first mold frame comprises a first groove into which the sidewall of the bottom chassis is inserted to be held.

6. The liquid crystal display of claim 5, wherein the first mold frame comprises a second groove into which the optical plate and the optical sheet are inserted.

7. The liquid crystal display of claim 6, wherein the second groove is defined by a pair of protrusions comprising an upper protrusion and a lower protrusion and protruding from an inner surface of a first mold frame sidewall, and
wherein the liquid crystal panel is disposed on the upper protrusion.

8. The liquid crystal display of claim 5, further comprising:
a second mold frame being connected with the first mold frame and
comprising a lower groove into which the sidewall of the bottom chassis is inserted to be held.

9. The liquid crystal display of claim 8, wherein the second mold frame comprises a second groove into which the optical plate and the optical sheet are inserted.

10. The liquid crystal display of claim 9, wherein the second groove is a lateral groove.

11. The liquid crystal display of claim 8, wherein the second mold frame has a straight shape.

12. The liquid crystal display of claim 5, further comprising a reflection sheet provided on the bottom chassis comprising at least one inclined surface corresponding to the sidewall of the bottom chassis, and
wherein the inclined surface of the reflection sheet has lamp Insertion holes through which the lamps are inserted.

13. The liquid crystal display of claim 5, wherein the first mold frame has a bending shape and is disposed at a corner of the bottom chassis.

14. The liquid crystal display of claim 8, wherein the first mold frame and the second mold frame is alternately disposed to make a closed loop.

15. A liquid crystal display comprising:
an optical plate;
an optical sheet provided on the optical plate;
a bottom chassis comprising a sidewall and a bottom surface to receive the optical plate;
a first mold frame supporting the optical sheet; and
a liquid crystal panel disposed on the first mold frame and dispaying images,
wherein the first mold frame comprises a first groove into which the sidewall of the bottom chassis is inserted to be held.

16. The liquid crystal display of claim 15, further comprising:
a light source provided on one side or both sides of the optical plate.

17. The liquid crystal display of claim 15 wherein the first mold frame further comprises a second groove into which the optical sheet is inserted.

18. The liquid crystal display of claim 17, wherein the second groove is defined by a pair of protrusions comprising an upper protrusion and a lower protrusion and protruding from an inner surface of a first mold frame sidewall, and
wherein the liquid crystal panel is disposed on the upper protrusion.

19. The liquid crystal display of claim 15, further comprising:
a second mold frame being connected with the first mold frame and
comprising a lower groove into which the sidewall of the bottom chassis is inserted to be held.

20. The liquid crystal display of claim 19, wherein the second mold frame comprises a second groove into which optical sheet is inserted.

21. The liquid crystal display of claim 20, wherein the second groove is a lateral groove.

22. The liquid crystal display of claim 19, wherein the second mold frame has a straight shape.

23. The liquid crystal display of claim 15, wherein the first mold frame has a bending shape and is disposed at a corner of the bottom chassis.

24. The liquid crystal display of claim 18, wherein the first mold frame and the second mold frame is alternately disposed to make a closed loop.
